(19) **Europäisches Patentamt / European Patent Office / Office européen des brevets**

(11) **EP 3 779 970 B1**

(12) **EUROPEAN PATENT SPECIFICATION**

(45) Date of publication and mention
of the grant of the patent:
**25.01.2023 Bulletin 2023/04**

(21) Application number: **18879061.2**

(22) Date of filing: **09.11.2018**

(51) International Patent Classification (IPC):
**G06F 40/129** *(2020.01)*    **G06F 40/30** *(2020.01)*
**G10L 15/26** *(2006.01)*    **G10L 15/22** *(2006.01)*
**G06F 3/01** *(2006.01)*

(52) Cooperative Patent Classification (CPC):
**G10L 15/22; G06F 40/129; G06F 40/30;**
G06F 3/018

(86) International application number:
**PCT/CN2018/114792**

(87) International publication number:
**WO 2019/096068 (23.05.2019 Gazette 2019/21)**

(54) **VOICE RECOGNITION AND ERROR CORRECTION METHOD AND VOICE RECOGNITION AND ERROR CORRECTION SYSTEM**

VERFAHREN ZUR SPRACHERKENNUNG UND FEHLERKORREKTUR UND SYSTEM ZUR SPRACHERKENNUNG UND FEHLERKORREKTUR

PROCÉDÉ ET SYSTÈME DE RECONNAISSANCE VOCALE ET DE CORRECTION D'ERREUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2017   CN 201711121071**

(43) Date of publication of application:
**17.02.2021   Bulletin 2021/07**

(73) Proprietor: **NIO (Anhui) Holding Co., Ltd.
Hefei City, Anhui Province (CN)**

(72) Inventors:
• **GE, Sihan**
  **Shanghai (CN)**
• **MA, Tianze**
  **Shanghai (CN)**
• **LIN, Feng**
  **Shanghai (CN)**
• **DUAN, Quansheng**
  **Shanghai (CN)**
• **ZHAO, Haotian**
  **Shanghai (CN)**
• **XIA, Yan**
  **Shanghai (CN)**
• **LIANG, Wei**
  **Shanghai (CN)**

• **ZHOU, Ji**
  **Shanghai (CN)**
• **XU, Longsheng**
  **Shanghai (CN)**
• **MA, Yingcai**
  **Shanghai (CN)**
• **YIN, Lutong**
  **Shanghai (CN)**

(74) Representative: **Vossius & Partner
Patentanwälte Rechtsanwälte mbB
Siebertstrasse 3
81675 München (DE)**

(56) References cited:
CN-A- 101 067 780    CN-A- 101 825 953
CN-A- 105 302 795    CN-A- 105 632 499
CN-A- 106 297 799    CN-A- 107 016 994

• **JUAN WEN ET AL: "Ambiguity solution of pinyin segmentation in continuous Pinyin-to-Character conversion", NATURAL LANGUAGE PROCESSING AND KNOWLEDGE ENGINEERING, 2008. NLP-KE '08. INTERNATIONAL CONFERENCE ON, IEEE, PISCATAWAY, NJ, USA, 19 October 2008 (2008-10-19), pages 1-7, XP031452108, ISBN: 978-1-4244-4515-8**

EP 3 779 970 B1

• K.L. KWOK, P. DENG: "Corpus-Based Pinyin Name Resolution", SIGHAN '02 PROCEEDINGS OF THE FIRST SIGHAN WORKSHOP ON CHINESE LANGUAGE PROCHESSING, 1 September 2002 (2002-09-01), XP040035270,

## Description

### Technical Field

The invention relates to speech recognition technologies, and particularly to a method and system for error correction in speech recognition.

### Background Art

Speech recognition is the process of recognizing and converting a sound into a piece of text. Chinese speech recognition is the conversion of speech into Chinese text according to a speaker's pronunciation. However, due to the differences in personal pronunciations, non-standard Chinese pinyin may lead to a great reduction in the accuracy of speech recognition.

When speech recognition is applied to a vehicle navigation scenario, a speech dialogue system will first convert the speech into text, then perform semantic understanding, recognize a place name, query the specific information of the place name, and give navigation. However, due to great differences in speakers' pronunciations, a large number of place names, and homophones, etc., the place names obtained through speech recognition may sometimes have errors, resulting in a user being unable to find a correct place. For example, three types of recognition errors are shown in Table 1 below:

Table 1

| Homophone | "Navigate to Jiatinghui (嘉亭荟)" → "Navigate to Jiatinghui (家庭会)" |
|---|---|
| Alveolar and velar nasals | "Navigate to Xingguangjiayuan (星光佳园)" → "Navigate to Xinguangjiayuan (新光家园)" |
| Flat tongue and retroflex | "Navigate to Zijingyicun (紫荆一村)" → "Navigate to Zhijinyicun (只进一村)" |

CN105302795 discloses techniques to check a Chinese text based on the fuzzy pronunciation of Chinese. All fuzzy pinyin of wrong word are found out by cartesian product.

### Summary of the Invention

In view of the above problems, the invention is intended to provide a system and method for error correction in speech recognition of a place name, which can improve the accuracy of speech recognition.

A method for error correction in speech recognition in an aspect of the invention is characterized by comprising the following steps:

a pinyin conversion step of converting speech information into pinyin after extraction by means of speech recognition and semantic understanding;

a first pinyin candidate set generation step of splitting the pinyin to obtain N pinyin lists, and performing a first Cartesian product operation on the N pinyin lists to generate a first pinyin candidate set, where N is a natural number;

a filtering step of filtering the pinyin in the first pinyin candidate set to eliminate irregular pinyin;

a second pinyin candidate set generation step of performing a second Cartesian product operation on the pinyin output in the filtering step to obtain a second pinyin candidate set;

a query generation step of constructing a query based on the second pinyin candidate set; and

a candidate place name generation step of querying the query in an inverted index to obtain candidate place names with high to low probabilities and display the candidate place names to a user.

Optionally, in the first pinyin candidate set generation step, the pinyin is split into initials and finals, a list of similar initials and a list of similar finals are found according to a similarity dictionary, and a Cartesian product operation is performed on the list of initials and the list of finals to generate a candidate set for the pinyin.

Optionally, in the first pinyin candidate set generation step, the list of similar initials for the initials is:

$$PC_k^s = [pc_{k1}^s, pc_{k2}^s, ..., pc_{kn}^s]$$,

the list of similar finals for the finals is: $PC_k^y = [pc_{k1}^y, pc_{k2}^y, ..., pc_{kn}^y]$,

then, the first Cartesian product operation is performed on $PC_k^s$ and $PC_k^y$ to generate similar pinyin for the pinyin to serve as the first pinyin candidate set, namely: $PC_k = PC_k^s \times PC_k^y$.

Optionally, in the second pinyin candidate set generation step, the second Cartesian product operation is performed on a candidate set for each piece of pinyin to obtain a correct pinyin candidate set: $C = PC_1 \times PC_2 \times ... \times PC_n$.

Optionally, in the filtering step, the pinyin in the first pinyin candidate set is filtered according to a pinyin dictionary.

Optionally, in the query generation step, the query is constructed based on the second pinyin candidate set according to the following formula:

$$\left\{ query: \left\{ bool: \left\{ should: \begin{cases} match\_phrase: \{pinyin: c_1, weight: w_1\}, \\ match\_phrase: \{pinyin: c_2, weight: w_2\} \end{cases} \right\} \right\} \right\},$$

where should represents an OR operation, match_phrase means that a document must contain a character string in a query statement, and weight is the weight of a query clause, the weight being calculated based on the distance between candidate pinyin and original pinyin.

Optionally, the weight is calculated as shown in the following formula:

$$distance(c_{org}, c) = \sum_{p_i \in c_{org}, q_i \in c} d(p_i, q_i)$$

where $p_i$ is the pinyin of the $i^{th}$ character in the original pinyin, $q_i$ is the pinyin of the $i^{th}$ character in the candidate pinyin, $d(p_i, q_i)$ is the distance between $p_i$ and $q_i$, and the value of $d(p_i, q_i)$ is the number of times that initials and finals are replaced for turning $p_i$ into $q_i$.

A system for error correction in speech recognition in an aspect of the invention is characterized by comprising:

a pinyin conversion module for acquiring speech information and converting the speech information into pinyin by means of speech recognition and semantic understanding;
a first pinyin candidate set generation module for splitting the pinyin to obtain N pinyin lists, and performing a first Cartesian product operation on the N pinyin lists to generate a first pinyin candidate set, where N is a natural number;
a filtering module for filtering the pinyin in the first pinyin candidate set to eliminate irregular pinyin;
a second pinyin candidate set generation module for performing a second Cartesian product operation on the pinyin output by the filtering module to obtain a second pinyin candidate set; and
a query generation module for constructing a query based on the second pinyin candidate set; and
a candidate generation module for querying the query in an inverted index to obtain candidate information with high to low probabilities and display the candidate information to a user.

Optionally, the first pinyin candidate set generation module is configured to split the pinyin into initials and finals, find a list of similar initials and a list of similar finals according to a similarity dictionary, and perform a Cartesian product operation on the list of initials and the list of finals to generate a candidate set for the pinyin,

wherein the list of similar initials for the initials is: $PC_k^s = [pc_{k1}^s, pc_{k2}^s, ..., pc_{kn}^s]$,

the list of similar finals for the finals is: $PC_k^y = [pc_{k1}^y, pc_{k2}^y, ..., pc_{kn}^y]$,

the first Cartesian product operation is further performed on $PC_k^s$ and $PC_k^y$ to generate similar pinyin for the pinyin to serve as the first pinyin candidate set, namely: $PC_k = PC_k^s \times PC_k^y$.

Optionally, the second pinyin candidate set generation module is configured to perform the second Cartesian product operation on a candidate set for each piece of pinyin to generate a correct pinyin candidate set: $C = PC_1 \times PC_2 \times ... \times PC_n$.

Optionally, the query generation module is configured to construct the query based on the second pinyin candidate set according to the following formula:

$$\left\{ query: \left\{ bool: \left\{ should: \begin{matrix} match\_phrase: \{pinyin: c_1, weight: w_1\}, \\ match\_phrase: \{pinyin: c_2, weight: w_2\} \end{matrix} \right\} \right\} \right\}$$

,

where should represents an OR operation, match_phrase means that a document must contain a character string in a query statement, and weight is the weight of a query clause, the weight being calculated based on the distance between candidate pinyin and original pinyin,

and the weight being calculated as shown in the following formula:

$$distance\left( c_{org}, c \right) = \sum_{p_i \in c_{org}, q_i \in c} d(p_i, q_i)$$

where $p_i$ is the pinyin of the $i^{th}$ character in the original pinyin, $q_i$ is the pinyin of the $i^{th}$ character in the candidate pinyin, $d(p_i, q_i)$ is the distance between $p_i$ and $q_i$, and the value of $d(p_i, q_i)$ is the number of times that initials and finals are replaced for turning $p_i$ into $q_i$.

A computer-readable medium of the invention, which has a computer program stored thereon, is characterized in that when the computer program is executed by a processor, a method for error correction in speech recognition as described is implemented.

A computer device of the invention, which comprises a memory, a processor, and a computer program stored on the memory and executable on the processor, is characterized in that when the processor executes the computer program, the steps of a method for error correction in speech recognition as described are implemented.

According to the method and system for error correction in speech recognition of the invention, it is possible to filter out wrong pinyin, thereby improving the accuracy of recognition. In addition, more similar pinyin can be calculated using the first pinyin candidate set generation module and the second pinyin candidate set generation module, and the candidate place names with high to low probabilities can be arranged using the query generation module and the candidate place name generation module, so that it is convenient for the user to select and the accuracy of recognition is also improved.

## Brief Description of the Drawings

FIG. 1 is a flowchart of a method for error correction in speech recognition in an embodiment of the invention.
FIG. 2 is an example representing a similarity dictionary.
FIG. 3 is an example representing a pinyin dictionary.
FIG. 4 is a schematic diagram of the construction of a system for error correction in speech recognition in an embodiment of the invention.

## Detailed Description of Embodiments

The following introduces some of multiple embodiments of the invention and is intended to provide a basic understanding of the invention. It is not intended to confirm the key or decisive elements of the invention or limit the scope of protection.

In the following description, the method and system for error correction in speech recognition of the invention will be described by taking the application thereof to a scenario for error correction in place name recognition as an example. Certainly, the method and system for error correction in speech recognition of the invention can be applicable not only to error correction in speech recognition of a place name, but also to various other scenarios, such as online search guidance, and shopping guidance.

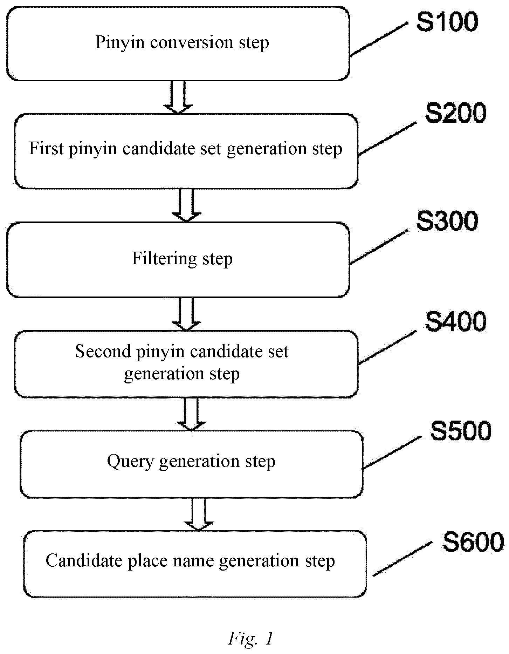

FIG. 1 is a flowchart of a method for error correction in speech recognition in an embodiment of the invention.

As shown in FIG. 1, the method for error correction in speech recognition in an embodiment of the invention comprises the following steps:

a pinyin conversion step S100: extracting a place name by means of speech recognition and semantic understanding, and converting the place name into place name pinyin, in which case specifically, for example, "上海滩 (Shanghai Bund)" is converted into pinyin to obtain a pinyin string: "shang hai tan";

a first pinyin candidate set generation step S200: splitting the place name pinyin to obtain N pinyin lists, and performing a first Cartesian product operation on the N pinyin lists to generate a first pinyin candidate set, where N is a natural number, in which case specifically, for example, the pinyin string "shang hai tan" obtained through conversion in the pinyin conversion step S100 contains pinyin of three characters, here, a candidate set is obtained for each of the three pieces of pinyin, because "sh" and "s" are similar and "ang" and "an" are similar (obtained from a similarity dictionary), the candidates corresponding to "shang" are "sang", "shan", and "san", as such, no other candidates for "hai" can be calculated, and "tan" has a candidate "tang", such that a list of candidates for each piece of pinyin is generated;

a filtering step S300: filtering the pinyin in the first pinyin candidate set to eliminate irregular pinyin; a second pinyin candidate set generation step S400: performing a second Cartesian product operation on the pinyin output in the filtering step to obtain a second pinyin candidate set, in which case specifically, for example, the candidates for the entire pinyin string "shang hai tan" are: sang hai tan, shan hai tan, san hai tan, shang hai tang, sang hai tang, shan hai tang, san hai tang;

a query generation step S500: constructing a query (namely, "query statement") based on the second pinyin candidate set; and

a candidate place name generation step S600: querying the query in an inverted index to obtain candidate place names with high to low probabilities and display the candidate place names to a user.

Next, the above steps will be specifically described.

In the pinyin conversion step S100, the place name is extracted by means of speech recognition and semantic understanding and converted into the place name pinyin. For example, a document D = (name, pinyin) is constructed, which has two attributes: a place name and pinyin corresponding to the place name. Examples of documents are shown in Table 2 below:

Table 2

| |
|---|
| $D_1$ : (嘉亭荟, jia ting hui) |
| $D_2$ : (星光佳园, xing guang jia yuan) |
| $D_3$ : (紫荆一村, zi jing yi cun) |

An inverted index is constructed based on pinyin. This process can be performed by means of an existing resource search engine, such as: elastic search, which constructs documents for all the place names in the above manner and indexes the documents.

Next, in the first pinyin candidate set generation step S200, after the place name is extracted from a semantic understanding result of a speech dialogue system, the place name is converted into pinyin $c_{org}$. Then, the place name pinyin is split to obtain a list of pinyin: P = [$p_1, p_2, \ldots, p_n$].

Each piece of pinyin $p_k$ is split into the initials $p_k^s$ and the finals $p_k^y$. According to the initials and the finals, from the similarity dictionary, a list of similar initials for the initials is found: $PC_k^s = [pc_{k1}^s, pc_{k2}^s, \ldots, pc_{kn}^s]$; and

a list of similar finals for the finals is found: $PC_k^y = [pc_{k1}^y, pc_{k2}^y, \ldots, pc_{kn}^y]$.

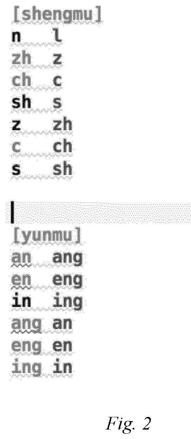

The similarity dictionary may be stored in a disk or a database in the form of a file, for example, and the system will read the file and load the similarity dictionary. Each record in the dictionary is a key-value pair, the key is an initial (or final), and the value is a similar initial (or final). Reference is made to FIG. 2 for an example of the similarity dictionary. There are common similar pronunciations in the dictionary, such as: "z" and "zh", "c" and "ch", etc.

Then, the first Cartesian product operation is performed on $PC_k^s$ and $PC_k^y$ to generate similar pinyin for the pinyin, that is, generating a candidate set: $PC_k = PC_k^s \times PC_k^y$.

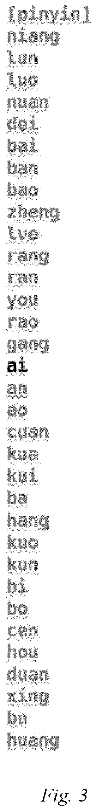

Since not all the pinyin in the generated candidate set is regular pinyin, the irregular pinyin needs to be filtered out. Therefore, in the filtering step S300, the pinyin in the generated candidate set is filtered to eliminate the irregular pinyin. This filtering step can be performed through a pinyin dictionary. The pinyin dictionary may be stored in a disk or a database in the form of a file, for example, and the system will read the file and load the pinyin dictionary. The dictionary contains all the regular Chinese pinyin, and each record in the dictionary is one piece of regular Chinese pinyin. Reference is made to FIG. 3 for an example of the pinyin dictionary.

Then, in the second pinyin candidate set generation step S400, the second Cartesian product operation is performed on a candidate set for each piece of pinyin to obtain a correct place name pinyin candidate set: $C = PC_1 \times PC_2 \times ... \times PC_n$.

Finally, in the query generation step S500, for the place name pinyin candidate set calculated in the above step, the query is constructed according to the candidate set to query a corresponding document in the inverted index. During the construction of the query, an OR operation is performed on each piece of candidate pinyin, and each piece of candidate pinyin has a different weight. The candidate pinyin that is closer to the original place name pinyin is more likely to be the correct place name pinyin, and thus has a higher weight. Here, an example of constructing a query in this embodiment is as follows:

$$\left\{ query: \left\{ bool: \left\{ should: \begin{cases} match\_phrase: \{pinyin: c_1, weight: w_1\}, \\ match\_phrase: \{pinyin: c_2, weight: w_2\} \end{cases} \right\} \right\} \right\}.$$

where should represents an OR operation, and match_phrase means that a document must contain a character string in a query statement, and here, means that a pinyin field in the document must contain a pinyin field in a query clause, weight is the weight of the query clause, and the weight is calculated based on the distance between candidate pinyin and original place name pinyin. The distance is calculated using the following formula:

$$distance(c_{org}, c) = \sum_{p_i \in c_{org}, q_i \in c} d(p_i, q_i).$$

where $p_i$ is the pinyin of the $i^{th}$ character in the original pinyin, $q_i$ is the pinyin of the $i^{th}$ character in the candidate pinyin, $d(p_i, q_i)$ is the distance between $p_i$ and $q_t$, and the value of $d(p_i, q_i)$ is the number of times that initials and finals are replaced for turning $p_i$ into $q_i$.

An example of the process of implementing the above formula using computer codes will be $distance(c_{org}, c)$ described next. The specific code implementation process of the algorithm is as follows:

```
Input: c_org - the original place name pinyin, c - the pinyin in a candidate set
Output: the distance between the original pinyin and the pinyin in the candidate set
1: Split c_org to pinyin list P = [p_1, p_2, ... , p_n]
2: Split c to pinyin list Q = [q_1, q_2, ... , q_n]
3: For i in range (0, n-1)
4: t → distance between p_i and q_i
5: distance → distance + t
6: End for
7: Return distance.
```

Finally, in the candidate place name generation step S600, the query can be queried in the inverted index to obtain a list of candidate place names with high to low probabilities. After the list of candidate place names are displayed, the user can select the correct place name so that error correction is implemented.

The method for error correction in speech recognition of a place name in an embodiment of the invention has been specifically described above. Next, a system for error correction in speech recognition of a place name in an embodiment of the invention will be described.

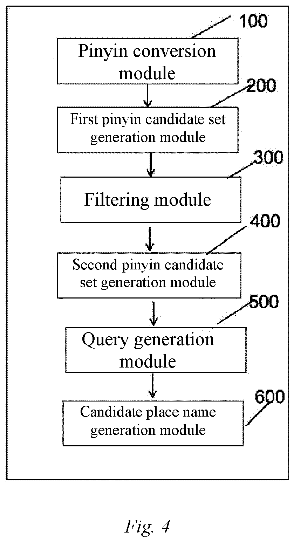

FIG. 4 is a schematic diagram of the construction of a system for error correction in speech recognition of a place name in an embodiment of the invention.

As shown in FIG. 4, the system for error correction in speech recognition of a place name in an embodiment of the invention has:

a pinyin conversion module 100 for acquiring speech information and extracting a place name from the speech information by means of speech recognition and semantic understanding, and converting the place name into place name pinyin, in which case specifically, for example, "上海滩" is converted into pinyin to obtain a pinyin string: "shang hai tan";

a first pinyin candidate set generation module 200 for splitting the place name pinyin to obtain N pinyin lists, and performing a first Cartesian product operation on the N pinyin lists to generate a first pinyin candidate set, where N is a natural number, in which case specifically, for example, the pinyin string "shang hai tan" obtained through conversion in the pinyin conversion step S 100 contains pinyin of three characters, here, a candidate set is obtained for each of the three pieces of pinyin, because "sh" and "s" are similar and "ang" and "an" are similar (obtained from a similarity dictionary), the candidates corresponding to "shang" are "sang", "shan", and "san", as such, no other candidates for "hai" can be calculated, and "tan" has a candidate "tang", such that a list of candidates for each piece of pinyin is generated;

a filtering module 300 for filtering the pinyin in the first pinyin candidate set to eliminate irregular pinyin;

a second pinyin candidate set generation module 400 for performing a second Cartesian product operation on the pinyin output by the filtering module to obtain a second pinyin candidate set, in which case specifically, for example, the candidates for the entire pinyin string "shang hai tan" are: sang hai tan, shan hai tan, san hai tan, shang hai tang, sang hai tang, shan hai tang, san hai tang; and

a query generation module 500 for constructing a query based on the second pinyin candidate set; and

a candidate place name generation module 600 for querying the query in an inverted index to obtain candidate place names with high to low probabilities and display the candidate place names to a user.

The first pinyin candidate set generation module 200 is configured to split the place name pinyin into initials and finals, find a list of similar initials and a list of similar finals according to a similarity dictionary, and perform a Cartesian product operation on the list of initials and the list of finals to generate a candidate set for the pinyin,

wherein the list of similar initials for the initials is: $PC_k^s = [pc_{k1}^s, pc_{k2}^s, ..., pc_{kn}^s]$,

the list of similar finals for the finals is: $PC_k^y = [pc_{k1}^y, pc_{k2}^y, ..., pc_{kn}^y]$,

the first Cartesian product operation is performed on $PC_k^s$ and $PC_k^y$ to generate similar pinyin for the pinyin to serve as the first pinyin candidate set, namely: $PC_k = PC_k^s \times PC_k^y$.

Further, the second pinyin candidate set generation module 400 is configured to perform the second Cartesian operation on a candidate set for each piece of pinyin to generate a correct place name pinyin candidate set: $C = PC_1 \times PC_2 \times ... \times PC_n$.

Furthermore, the query generation module 500 is configured to construct the query based on the second pinyin candidate set according to the following formula:

$$\left\{ query: \left\{ bool: \left\{ should: \begin{matrix} match\_phrase: \{pinyin: c_1, weight: w_1\}, \\ match\_phrase: \{pinyin: c_2, weight: w_2\} \end{matrix} \right\} \right\} \right\},$$

where should represents an OR operation, match_phrase means that a document must contain a character string in a query statement, and weight is the weight of a query clause, the weight being calculated based on the distance between candidate pinyin and original place name pinyin,

and the weight being calculated as shown in the following formula:

$$distance\big(c_{org}, c\big) = \sum_{p_i \in c_{org}, q_i \in c} d(p_i, q_i)$$

where $p_i$ is the pinyin of the $i^{th}$ character in the original pinyin, $q_i$ is the pinyin of the $i^{th}$ character in the candidate pinyin, $d(p_i, q_i)$ is the distance between $p_i$ and $q_i$, and the value of $d(p_i, q_i)$ is the number of times that initials and finals are replaced for turning $p_i$ into $q_i$.

The system for error correction in speech recognition of a place name of the invention can filter out wrong pinyin using the filtering module 300, thereby improving the accuracy of recognition. In addition, more similar pinyin can be calculated using the first pinyin candidate set generation module 200 and the second pinyin candidate set generation module 400, and further, the candidate place names with high to low probabilities can be arranged using the query generation module 500 and the candidate place name generation module 600, so that it is convenient for the user to select and the accuracy of recognition is also improved.

Furthermore, the invention provides a computer-readable medium having a computer program stored thereon, wherein when the computer program is executed by a processor, the above method for error correction in speech recognition of a place name is implemented.

Furthermore, the invention provides a computer device, which comprises a memory, a processor, and a computer program stored on the memory and executable on the processor. When the processor executes the above computer program, the above method for error correction in speech recognition of a place name is implemented.

For the computer-readable medium, there is a magnetic recording device, an optical disc, a magneto-optical recording medium, a semiconductor memory, etc. For the magnetic recording device, there is an HDD, an FD, a magnetic tape, etc. For the optical disc, there is a DVD (Digital Versatile Disc), a DVD-RAM, a CD-ROM, a CD-R (Recordable)/RW (Rewritable), etc. For the magneto-optical recording device, there is an MO (Magneto Optical Disk), etc.

The above examples mainly illustrate the system and method for error correction in speech recognition of a place name of the present invention. Although only some specific implementations of the invention are described, a person of ordinary skill in the art should understand that the invention may be implemented in multiple other forms without departing from the scope of the claims.

Accordingly, the present examples and embodiments are considered to be illustrative rather than restrictive, and the invention may encompass various modifications and alterations without departing from the scope of the invention that are defined by the appended claims.

## Claims

1. A method for error correction in speech recognition, **characterized by** comprising the following steps:

   a pinyin conversion step of converting speech information into pinyin;
   a first pinyin candidate set generation step of splitting the pinyin to obtain N pinyin lists, and performing a first Cartesian product operation on the N pinyin lists to generate a first pinyin candidate set, where N is a natural number; the method is **characterised by** further comprising:
   a filtering step of filtering the pinyin in the first pinyin candidate set to eliminate irregular pinyin;
   a second pinyin candidate set generation step of performing a second Cartesian product operation on the pinyin output in the filtering step to obtain a second pinyin candidate set;
   a query generation step of constructing a query based on the second pinyin candidate set; and
   a candidate information generation step of querying the query in an inverted index to obtain candidate information with high to low probabilities and display the candidate information to a user.

2. The method for error correction in speech recognition of claim 1, **characterized in that**
   in the first pinyin candidate set generation step, the pinyin is split into initials and finals, a list of similar initials and a list of similar finals are found according to a similarity dictionary, and a Cartesian product operation is performed on the list of initials and the list of finals to generate a candidate set for the pinyin.

3. The method for error correction in speech recognition of claim 2, **characterized in that**

in the first pinyin candidate set generation step, the list of similar initials for the initials is:

$$PC_k^s = [pc_{k1}^s, pc_{k2}^s, ..., pc_{kn}^s],$$

the list of similar finals for the finals is: $PC_k^y = [pc_{k1}^y, pc_{k2}^y, ..., pc_{kn}^y]$ ,

then, the first Cartesian product operation is performed on $PC_k^s$ and $PC_k^y$ to generate similar pinyin for the pinyin to serve as the first pinyin candidate set, namely: $PC_k = PC_k^s \times PC_k^y$ .

4. The method for error correction in speech recognition of claim 3, **characterized in that**
   in the second pinyin candidate set generation step, the second Cartesian product operation is performed on a candidate set for each piece of pinyin to obtain a correct pinyin candidate set: C = $PC_1 \times PC_2 \times ... \times PC_n$.

5. The method for error correction in speech recognition of claim 3, **characterized in that**
   in the filtering step, the pinyin in the first pinyin candidate set is filtered according to a pinyin dictionary.

6. The method for error correction in speech recognition of claim 5, **characterized in that**
   in the query generation step, the query is constructed based on the second pinyin candidate set according to the following formula:

$$\left\{ query: \left\{ bool: \left\{ should: \begin{Bmatrix} match\_phrase: \{pinyin: c_1, weight: w_1\}, \\ match\_phrase: \{pinyin: c_2, weight: w_2\} \end{Bmatrix} \right\} \right\} \right\}$$

where should represents an OR operation, match_phrase means that a document must contain a character string in a query statement, and weight is the weight of a query clause, the weight being calculated based on the distance between candidate pinyin and original pinyin.

7. The method for error correction in speech recognition of claim 6, **characterized in that**
   the weight is calculated as shown in the following formula:

$$distance(c_{org}, c) = \sum_{p_i \in c_{org}, q_i \in c} d(p_i, q_i)$$

where $p_i$ is the pinyin of the $i^{th}$ character in the original pinyin, $q_i$ is the pinyin of the $i^{th}$ character in the candidate pinyin, $d(p_i, q_i)$ is the distance between $p_i$ and $q_i$, and the value of $d(p_i, q_i)$ is the number of times that initials and finals are replaced for turning $p_i$ into $q_i$.

8. A system for error correction in speech recognition, **characterized by** comprising:

   a pinyin conversion module for acquiring speech information and converting the speech information into pinyin;
   a first pinyin candidate set generation module for splitting the pinyin to obtain N pinyin lists, and performing a first Cartesian product operation on the N pinyin lists to generate a first pinyin candidate set, where N is a natural number; the system is **characterised in that** it further comprises:

   a filtering module for filtering the pinyin in the first pinyin candidate set to eliminate irregular pinyin;
   a second pinyin candidate set generation module for performing a second Cartesian product operation on the pinyin output by the filtering module to obtain a second pinyin candidate set; and

a query generation module for constructing a query based on the second pinyin candidate set; and

a candidate information generation module for querying the query in an inverted index to obtain candidate information with high to low probabilities and display the candidate information to a user.

9. The system for error correction in speech recognition of claim 8, **characterized in that**

the first pinyin candidate set generation module is configured to split the pinyin into initials and finals, find a list of similar initials and a list of similar finals according to a similarity dictionary, and perform a Cartesian product operation on the list of initials and the list of finals to generate a candidate set for the pinyin,

wherein the list of similar initials for the initials is: $PC_k^s = [pc_{k1}^s, pc_{k2}^s, ..., pc_{kn}^s]$ ,

the list of similar finals for the finals is: $PC_k^y = [pc_{k1}^y, pc_{k2}^y, ..., pc_{kn}^y]$ ,

the first Cartesian product operation is further performed on $PC_k^s$ and $PC_k^y$ to generate similar pinyin for the pinyin to serve as the first pinyin candidate set, namely: $PC_k = PC_k^s \times PC_k^y$ .

10. The system for error correction in speech recognition of claim 9, **characterized in that** the second pinyin candidate set generation module is configured to perform the second Cartesian product operation on a candidate set for each piece of pinyin to generate a correct pinyin candidate set: $C = PC_1 \times PC_2 \times ... \times PC_n$.

11. The system for error correction in speech recognition of claim 10, **characterized in that** the query generation module is configured to construct the query based on the second pinyin candidate set according to the following formula:

$$\left\{ query: \left\{ bool: \left\{ should: \begin{cases} match\_phrase: \{pinyin: c_1, weight: w_1\}, \\ match\_phrase: \{pinyin: c_2, weight: w_2\} \end{cases} \right\} \right\} \right\}$$

where should represents an OR operation, match_phrase means that a document must contain a character string in a query statement, and weight is the weight of a query clause, the weight being calculated based on the distance between candidate pinyin and original pinyin,
and the weight being calculated as shown in the following formula:

$$distance\left(c_{org}, c\right) = \sum_{p_i \in c_{org}, q_i \in c} d(p_i, q_i)$$

where $p_i$ is the pinyin of the $i^{th}$ character in the original pinyin, $q_i$ is the pinyin of the $i^{th}$ character in the candidate pinyin, $d(p_i, q_i)$ is the distance between $p_i$ and $q_i$, and the value of $d(p_i, q_i)$ is the number of times that initials and finals are replaced for turning $p_i$ into $q_i$.

12. A computer-readable medium having a computer program stored thereon, **characterized in that** when the computer program is executed by a processor, a method for error correction in speech recognition of any one of claims 1 to 7 is implemented.

13. A computer device, comprising a memory, a processor, and a computer program stored on the memory and executable on the processor, **characterized in that** when the processor executes the computer program, the steps of a method for error correction in speech recognition of any one of claims 1 to 7 are implemented.

**Patentansprüche**

1. Verfahren zur Fehlerkorrektur in der Spracherkennung, **dadurch gekennzeichnet, dass** es die folgenden Schritte aufweist:

   einen Pinyin-Konvertierungsschritt zum Umwandeln von Sprachinformationen in Pinyin;
   einen Schritt zum Erzeugen einer ersten Pinyin-Kandidatenmenge, bei dem das Pinyin aufgeteilt wird, um N Pinyin-Listen zu erhalten, und eine erste kartesische Produktoperation an den N Pinyin-Listen durchgeführt wird, um eine erste Pinyin-Kandidatenmenge zu erzeugen, wobei N eine natürliche Zahl ist; wobei das Verfahren **dadurch gekennzeichnet ist, dass** es ferner aufweist:

   einen Filterungsschritt, bei dem das Pinyin in der ersten Pinyin-Kandidatenmenge gefiltert wird, um unregelmäßiges Pinyin zu eliminieren;
   einen Schritt zum Erzeugen einer zweiten Pinyin-Kandidatenmenge, bei dem eine zweite kartesische Produktoperation an der Pinyin-Ausgabe im Filterungsschritt durchgeführt wird, um eine zweite Pinyin-Kandidatenmenge zu erhalten;
   einen Schritt zum Erzeugen einer Abfrage, bei dem eine Abfrage basierend auf der zweiten Pinyin-Kandidatenmenge erzeugt wird; und
   einen Schritt zum Erzeugen von Kandidateninformationen, bei dem die Abfrage in einem invertierten Index abgefragt wird, um Kandidateninformationen mit hohen bis niedrigen Wahrscheinlichkeiten zu erhalten und die Kandidateninformationen einem Benutzer anzuzeigen.

2. Verfahren zur Fehlerkorrektur in der Spracherkennung nach Anspruch 1, **dadurch gekennzeichnet, dass** im Schritt zum Erzeugen einer ersten Pinyin-Kandidatenmenge das Pinyin in Anlaute und Auslaute unterteilt wird, eine Liste ähnlicher Anlaute und eine Liste ähnlicher Auslaute gemäß einem Ähnlichkeits-Wörterbuch gefunden wird und eine kartesische Produktoperation an der Liste der Anlaute und der Liste der Auslaute durchgeführt wird, um eine Kandidatenmenge für das Pinyin zu erzeugen.

3. Verfahren zur Fehlerkorrektur in der Spracherkennung nach Anspruch 2, **dadurch gekennzeichnet, dass** im Schritt zum Erzeugen der ersten Pinyin-Kandidatenmenge die Liste der ähnlichen Anlaute für die Anlaute lautet:

$$PC_k^s = [pc_{k1}^s, pc_{k2}^s, ..., pc_{kn}^s],$$

die Liste der ähnlichen Auslaute für die Auslaute lautet: $PC_k^y = [pc_{k1}^y, pc_{k2}^y, ..., pc_{kn}^y]$,

anschließend wird die erste kartesische Produktoperation an $PC_k^s$ und $PC_k^y$ durchgeführt, um ein ähnliches Pinyin für das Pinyin zu erzeugen, das als erste Pinyin-Kandidatenmenge dient,

nämlich: $PC_k = PC_k^s \times PC_k^y$.

4. Verfahren zur Fehlerkorrektur in der Spracherkennung nach Anspruch 3, **dadurch gekennzeichnet, dass** im Schritt zum Erzeugen der zweiten Pinyin-Kandidatenmenge die zweite kartesische Produktoperation an einer Kandidatenmenge für jedes Pinyin durchgeführt wird, um eine korrekte Pinyin-Kandidatenmenge zu erhalten: $C = PC_1 \times PC_2 \times ... \times PC_n$.

5. Verfahren zur Fehlerkorrektur in der Spracherkennung nach Anspruch 3, **dadurch gekennzeichnet, dass** im Filterungsschritt das Pinyin in der ersten Pinyin-Kandidatenmenge gemäß einem Pinyin-Wörterbuch gefiltert wird.

6. Verfahren zur Fehlerkorrektur in der Spracherkennung nach Anspruch 5, **dadurch gekennzeichnet, dass** im Schritt zum Erzeugen der Abfrage ("query") die Abfrage basierend auf der zweiten Pinyin-Kandidatenmenge gemäß der folgenden Formel erzeugt wird:

$$\left\{ query: \left\{ bool: \left\{ should: \begin{matrix} \{match\_phrase: \{pinyin: c_1, weight: w_1\},\} \\ \{match\_phrase: \{pinyin: c_2, weight: w_2\}\} \end{matrix} \right\} \right\} \right\}$$

wobei "should" für eine ODER-Verknüpfung steht, "match_phrase" bedeutet, dass ein Dokument eine Zeichenkette in einer Abfrageanweisung enthalten muss, und "weight" das Gewicht einer Abfrageklausel ist, wobei das Gewicht basierend auf dem Abstand zwischen Kandidaten-Pinyin und Original-Pinyin berechnet wird.

7. Verfahren zur Fehlerkorrektur in der Spracherkennung nach Anspruch 6, **dadurch gekennzeichnet, dass** das Gewicht wie in der folgenden Formel gezeigt berechnet wird:

$$distance(c_{org}, c) = \sum_{p_i \in c_{org}, q_i \in c} d(p_i, q_i)$$

wobei $p_i$ das Pinyin des i-ten Zeichens im Original-Pinyin ist, $q_i$ das Pinyin des i-ten Zeichens im Kandidaten-Pinyin ist, $d(p_i, q_i)$ der Abstand ("distance") zwischen $p_i$ und $q_i$ ist und der Wert von $d(p_i, q_i)$ der Häufigkeit entspricht, mit der Anlaute und Auslaute ausgetauscht werden, um $p_i$ in $q_i$ umzuwandeln.

8. System zur Fehlerkorrektur in der Spracherkennung, **dadurch gekennzeichnet, dass** es aufweist:

ein Pinyin-Konvertierungsmodul zum Erfassen von Sprachinformationen und Umwandeln der Sprachinformationen in Pinyin;
ein Modul zum Erzeugen einer ersten Pinyin-Kandidatenmenge, um das Pinyin aufzuteilen, um N Pinyin-Listen zu erhalten, und eine erste kartesische Produktoperation an den N Pinyin-Listen durchzuführen, um eine erste Pinyin-Kandidatenmenge zu erzeugen, wobei N eine natürliche Zahl ist; wobei das System **dadurch gekennzeichnet ist, dass** es ferner aufweist:

ein Filterungsmodul zum Filtern des Pinyin in der ersten Pinyin-Kandidatenmenge, um unregelmäßiges Pinyin zu eliminieren;
ein Modul zum Erzeugen einer zweiten Pinyin-Kandidatenmenge, um eine zweite kartesische Produktoperation an der Pinyin-Ausgabe des Filterungsmoduls durchzuführen, um eine zweite Pinyin-Kandidatenmenge zu erhalten; und
Modul zum Erzeugen einer Abfrage, um eine Abfrage basierend auf der zweiten Pinyin-Kandidatenmenge zu erzeugen; und

ein Modul zum Erzeugen von Kandidateninformationen, um die Abfrage in einem invertierten Index abzufragen, um Kandidateninformationen mit hohen bis niedrigen Wahrscheinlichkeiten zu erhalten und die Kandidateninformationen einem Benutzer anzuzeigen.

9. System zur Fehlerkorrektur in der Spracherkennung nach Anspruch 8, **dadurch gekennzeichnet, dass** das Modul zum Erzeugen einer ersten Pinyin-Kandidatenmenge dafür ausgelegt ist, das Pinyin in Anlaute und Auslaute zu unterteilen, eine Liste ähnlicher Anlaute und eine Liste ähnlicher Auslaute gemäß einem Ähnlichkeits-Wörterbuch zu finden und eine kartesische Produktoperation an der Liste der Anlaute und der Liste der Auslaute durchzuführen, um eine Kandidatenmenge für das Pinyin zu erzeugen,

wobei die Liste der ähnlichen Anlaute für die Anlaute lautet: $PC_k^s = [pc_{k1}^s, pc_{k2}^s, ..., pc_{kn}^s]$,

die Liste der ähnlichen Auslaute für die Auslaute lautet: $PC_k^y = [pc_{k1}^y, pc_{k2}^y, ..., pc_{kn}^y]$,

die erste kartesische Produktoperation ferner an $PC_k^s$ und $PC_k^y$ durchgeführt wird, um ein ähnliches Pinyin für das Pinyin zu erzeugen, das als erste Pinyin-Kandidatenmenge dient, nämlich: $PC_k = PC_k^s \times PC_k^y$.

10. System zur Fehlerkorrektur in der Spracherkennung nach Anspruch 9, **dadurch gekennzeichnet, dass** das Modul zum Erzeugen einer zweiten Pinyin-Kandidatenmenge dafür ausgelegt ist, die zweite kartesische Produktoperation an einer Kandidatenmenge für jedes Pinyin durchzuführen, um eine korrekte Pinyin-Kandidatenmenge zu erzeugen: $C = PC_1 \times PC_2 \times ... \times PC_n$.

11. System zur Fehlerkorrektur in der Spracherkennung nach Anspruch 10, **dadurch gekennzeichnet, dass** das Modul zum Erzeugen der Abfrage ("query") dafür ausgelegt ist, die Abfrage basierend auf der zweiten Pinyin-Kandidatenmenge gemäß der folgenden Formel zu erzeugen:

$$\left\{ query: \left\{ bool: \left\{ should: \begin{cases} match\_phrase: \{pinyin: c_1, weight: w_1\}, \\ match\_phrase: \{pinyin: c_2, weight: w_2\} \end{cases} \right\} \right\} \right\}$$

wobei "should" für eine ODER-Verknüpfung steht, "match_phrase" bedeutet, dass ein Dokument eine Zeichenkette in einer Abfrageanweisung enthalten muss, und "weight" das Gewicht einer Abfrageklausel ist, wobei das Gewicht basierend auf dem Abstand zwischen Kandidaten-Pinyin und Original-Pinyin berechnet wird, und das Gewicht wie in der folgenden Formel gezeigt berechnet wird:

$$distance(c_{org}, c) = \sum_{p_i \in c_{org}, q_i \in c} d(p_i, q_i)$$

wobei $p_i$ das Pinyin des i-ten Zeichens im Original-Pinyin ist, $q_i$ das Pinyin des i-ten Zeichens im Kandidaten-Pinyin ist, $d(p_i, q_i)$ der Abstand ("distance") zwischen $p_i$ und $q_i$ ist und der Wert von $d(p_i, q_i)$ der Häufigkeit entspricht, mit der Anlaute und Auslaute ausgetauscht werden, um $p_i$ in $q_i$ umzuwandeln.

12. Computerlesbarer Datenträger mit einem darauf gespeicherten Computerprogramm, **dadurch gekennzeichnet, dass** bei Ausführung des Computerprogramms durch einen Prozessor ein Verfahren zur Fehlerkorrektur in der Spracherkennung nach einem der Ansprüche 1 bis 7 implementiert wird.

13. Computervorrichtung, die einen Speicher, einen Prozessor und ein Computerprogramm, das in dem Speicher gespeichert und auf dem Prozessor ausführbar ist, aufweist, **dadurch gekennzeichnet, dass**, wenn der Prozessor das Computerprogramm ausführt, die Schritte eines Verfahrens zur Fehlerkorrektur in der Spracherkennung nach einem der Ansprüche 1 bis 7 implementiert werden.

## Revendications

1. Procédé de correction d'erreurs dans la reconnaissance vocale, **caractérisé en ce qu'**il comprend les étapes suivantes :

   une étape de conversion en pinyin comprenant de convertir des informations vocales en pinyin ;
   une étape de génération d'un premier ensemble de candidats pinyin comprenant de diviser le pinyin afin d'obtenir N listes de pinyin, et d'effectuer une première opération de produit cartésien sur les N listes de pinyin afin de générer un premier ensemble de candidats pinyin, où N est un nombre naturel ;
   le procédé est **caractérisé en ce qu'**il comprend en outre :

   une étape de filtrage comprenant de filtrer le pinyin dans le premier ensemble de candidats pinyin pour éliminer le pinyin irrégulier ;
   une étape de génération d'un deuxième ensemble de candidats pinyin comprenant d'effectuer une deuxième opération de produit cartésien sur la sortie pinyin dans l'étape de filtrage pour obtenir un deuxième ensemble de candidats pinyin ;
   une étape de génération de requête comprenant de construire une requête basée sur le second ensemble de candidats pinyin ; et
   une étape de génération d'informations de candidats comprenant de soumettre la requête dans un index inversé pour obtenir des informations de candidats avec des probabilités élevées à faibles et afficher les informations de candidats à l'attention d'un utilisateur.

2. Procédé de correction d'erreurs dans la reconnaissance vocale selon la revendication 1, **caractérisé en ce que** : dans l'étape de génération d'un premier ensemble de candidats pinyin, le pinyin est divisé en initiales et finales, une liste d'initiales similaires et une liste de finales similaires sont trouvées selon un dictionnaire de similarité, et une opération de produit cartésien est effectuée sur la liste d'initiales et la liste de finales pour générer un ensemble de candidats pour le pinyin.

**3.** Procédé de correction d'erreurs dans la reconnaissance vocale selon la revendication 2, **caractérisé en ce que** :

dans l'étape de génération du premier ensemble de candidats pinyin, la liste d'initiales similaires pour les initiales est :
$PC^s_k = [pc^s_{k1}, pc^s_{k2}, \dots, pc^s_{kn}]$,
la liste des finales similaires pour les finales est :
$PC^Y_k = [pc^y_{k1}, pc^y_{k2}, \dots, pc^y_{kn}]$,
puis, la première opération de produit cartésien est effectuée sur $PC^s_k$ et $PC^y_k$ pour générer des pinyins similaires pour le pinyin servant de premier ensemble de candidats pinyin, à savoir : $PC_k = PC^s_k \times PC^y_k$.

**4.** Procédé de correction d'erreurs dans la reconnaissance vocale selon la revendication 3, **caractérisé en ce que** : dans l'étape de génération du second ensemble de candidats pinyin, la seconde opération de produit cartésien est effectuée sur un ensemble de candidats pour chaque morceau de pinyin afin d'obtenir un ensemble de candidats pinyin correct : $C = PC_1 \times PC_2 \times \dots \times PC_n$.

**5.** Procédé de correction d'erreurs dans la reconnaissance vocale selon la revendication 3, **caractérisé en ce que** : dans l'étape de filtrage, le pinyin dans le premier ensemble de candidats pinyin est filtré conformément à un dictionnaire pinyin.

**6.** Procédé de correction d'erreurs dans la reconnaissance vocale selon la revendication 5, **caractérisé en ce que** : dans l'étape de génération de requête ("query"), la requête est construite sur la base du second ensemble de candidats pinyin selon la formule suivante :

$$\left\{ query: \left\{ bool: \left\{ should: \begin{Bmatrix} match\_phrase: \{pinyin: c_1, weight: w_1\} \\ match\_phrase: \{pinyin: c_2, weight: w_2\} \end{Bmatrix} \right\} \right\} \right\}$$

où *should* représente une opération OU, *match_phrase* signifie qu'un document doit contenir une chaîne de caractères dans une déclaration de requête, et *weight* est le poids d'une clause de requête, le poids étant calculé sur la base de la distance entre le candidat pinyin et l'original pinyin.

**7.** Procédé de correction d'erreurs dans la reconnaissance vocale selon la revendication 6, **caractérisé en ce que** le poids est calculé comme indiqué dans la formule suivante :

$$distance\left(c_{org}, c\right) = \sum_{p_i \in c_{org}, q_i \in c} d(p_i, q_i)$$

où $p_i$ est le pinyin du $i^{ème}$ caractère dans l'original pinyin, $q_i$ est le pinyin du $i^{ème}$ caractère dans le candidat pinyin, $d(p_i, q_i)$ est la distance entre $p_i$ et $q_i$, et la valeur de $d(p_i, q_i)$ est le nombre de fois où les initiales et les finales sont remplacées pour transformer $p_i$ en $q_i$.

**8.** Système de correction d'erreurs dans la reconnaissance vocale, **caractérisé en ce qu'**il comprend :

un module de conversion en pinyin pour acquérir des informations vocales et convertir les informations vocales en pinyin ;
un module de génération d'un premier ensemble de candidats pinyin pour diviser le pinyin afin d'obtenir N listes de pinyin, et effectuer une première opération de produit cartésien sur les N listes de pinyin afin de générer un premier ensemble de candidats pinyin, où N est un nombre naturel ;
le système étant **caractérisé en ce qu'**il comprend en outre :

un module de filtrage pour filtrer le pinyin dans le premier ensemble de candidats pinyin pour éliminer le pinyin irrégulier ;
un module de génération d'un deuxième ensemble de candidats pinyin pour effectuer une deuxième opération de produit cartésien sur le pinyin fourni par le module de filtrage afin d'obtenir un deuxième ensemble de candidats pinyin ; et

un module de génération de requête pour construire une requête basée sur le second ensemble de candidats pinyin ; et

un module de génération d'informations de candidats pour soumettre la requête dans un index inversé pour obtenir des informations de candidats avec des probabilités élevées à faibles et afficher les informations de candidats à l'attention d'un utilisateur.

9. Système de correction d'erreurs dans la reconnaissance vocale selon la revendication 8, **caractérisé en ce que** :

le module de génération d'un premier ensemble de candidats pinyin est configuré pour diviser le pinyin en initiales et finales, trouver une liste d'initiales similaires et une liste de finales similaires selon un dictionnaire de similarité, et effectuer une opération de produit cartésien sur la liste d'initiales et la liste de finales pour générer un ensemble de candidats pour le pinyin,
où la liste d'initiales similaires pour les initiales est :
$PC^s_k = [pc^s_{k1}, pc^s_{k2}, ... , pc^s_{kn}]$,
la liste des finales similaires pour les finales est :
$PC^y_k = [pc^y_{k1}, pc^y_{k2}, ... , pc^y_{kn}]$,
la première opération de produit cartésien est en outre effectuée sur $PC^s_k$ et $PC^y_k$ pour générer des pinyins similaires pour le pinyin servant de premier ensemble de candidats pinyin, à savoir : $PC_k = PC^s_k \times PC^y_k$.

10. Système de correction d'erreurs dans la reconnaissance vocale selon la revendication 9, **caractérisé en ce que** :
le module de génération d'un second ensemble de candidats pinyin est configuré pour effectuer la seconde opération de produit cartésien sur un ensemble de candidats pour chaque morceau de pinyin afin de générer un ensemble de candidats pinyin correct : $C = PC_1 \times PC_2 \times ... \times PC_n$.

11. Système de correction d'erreurs dans la reconnaissance vocale selon la revendication 10, **caractérisé en ce que** :
le module de génération de requête ("query")est configuré pour construire la requête sur la base du second ensemble de candidats pinyin selon la formule suivante :

$$\left\{ query : \left\{ bool : \left\{ should : \begin{cases} match\_phrase : \{pinyin : c_1, weight : w_1\} \\ match\_phrase : \{pinyin : c_2, weight : w_2\} \end{cases} \right\} \right\} \right\}$$

où *should* représente une opération OU, *match_phrase* signifie qu'un document doit contenir une chaîne de caractères dans une déclaration de requête, et *weight* est le poids d'une clause de requête, le poids étant calculé sur la base de la distance entre le candidat pinyin et l'original pinyin,
et le poids étant calculé comme indiqué dans la formule suivante :

$$distance\left(c_{org}, c\right) = \sum_{p_i \in c_{org}, q_i \in c} d(p_i, q_i)$$

où $p_i$ est le pinyin du $i^{ème}$ caractère dans l'original pinyin, $q_i$ est le pinyin du $i^{ème}$ caractère dans le candidat pinyin, $d(p_i, q_i)$ est la distance entre $p_i$ et $q_i$, et la valeur de $d(p_i, q_i)$ est le nombre de fois où les initiales et les finales sont remplacées pour transformer $p_i$ en $q_i$.

12. Support lisible par ordinateur sur lequel est stocké un programme informatique, **caractérisé en ce que**, lorsque le programme informatique est exécuté par un processeur, un procédé de correction d'erreurs dans la reconnaissance vocale de l'une quelconque des revendications 1 à 7 est mis en oeuvre.

13. Dispositif informatique, comprenant une mémoire, un processeur, et un programme informatique stocké sur la mémoire et exécutable sur le processeur, **caractérisé en ce que**, lorsque le processeur exécute le programme informatique, les étapes d'un procédé de correction d'erreurs dans la reconnaissance vocale de l'une quelconque des revendications 1 à 7 sont mises en oeuvre.

```
┌─────────────────────────────────────┐
│                                      │      S100
│        Pinyin conversion step        │
│                                      │
└─────────────────────────────────────┘
                   ⇓
┌─────────────────────────────────────┐
│                                      │      S200
│ First pinyin candidate set generation step │
│                                      │
└─────────────────────────────────────┘
                   ⇓
┌─────────────────────────────────────┐
│                                      │      S300
│            Filtering step            │
│                                      │
└─────────────────────────────────────┘
                   ⇓
┌─────────────────────────────────────┐
│        Second pinyin candidate set   │      S400
│            generation step           │
└─────────────────────────────────────┘
                   ⇓
┌─────────────────────────────────────┐
│                                      │      S500
│        Query generation step         │
│                                      │
└─────────────────────────────────────┘
                   ⇓
┌─────────────────────────────────────┐
│                                      │      S600
│   Candidate place name generation step   │
│                                      │
└─────────────────────────────────────┘
```

*Fig. 1*

[shengmu]

| n | l |
|----|----|
| zh | z |
| ch | c |
| sh | s |
| z | zh |
| c | ch |
| s | sh |

|

[yunmu]

| an | ang |
|-----|-----|
| en | eng |
| in | ing |
| ang | an |
| eng | en |
| ing | in |

*Fig. 2*

```
[pinyin]
niang
lun
luo
nuan
dei
bai
ban
bao
zheng
lve
rang
ran
you
rao
gang
ai
an
ao
cuan
kua
kui
ba
hang
kuo
kun
bi
bo
cen
hou
duan
xing
bu
huang
```

*Fig. 3*

*Fig. 4*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105302795